# EUROPÄISCHE PATENTSCHRIFT

(11) **EP 3 259 236 B1**
(45) Veröffentlichungstag und Bekanntmachung des Hinweises auf die Patenterteilung: **26.08.2020**
(21) Anmeldenummer: 16704663.0
(22) Anmeldetag: 17.02.2016
(51) Int. Cl.: C03B 19/14, B01D 53/22

(54) **VERFAHREN UND VORRICHTUNG ZUR HERSTELLUNG VON QUARZGLAS AUS EINER POLYMERISIERBAREN POLYALKYLSILOXANVERBINDUNG MIT MEMBRANFILTER ALS REINIGUNGSVORRICHTUNG**
METHOD AND APPARATUS FOR MAKING SILICA GLASS FROM POLYMERISABLE POLYALKYLSILOXANE WITH MEMBRANE FILTER AS CLEANING DEVICE
PROCÉDÉ ET DISPOSITIF DE FABRICATION DE VERRE DE SILICE À PARTIR DE POLYALKAYLSILOXANE POLYMÉRISABLE AVEC UN FILTRE MEMBRANE COMME DISPOSITIF DE PURIFICATION

(30) Priorität: 18.02.2015 EP 15155566
(43) Veröffentlichungstag der Anmeldung: 27.12.2017
(73) Patentinhaber: Heraeus Quarzglas GmbH & Co. KG, 63450 Hanau (DE)
(72) Erfinder: OTTO, Norbert, 06179 Teutschenthal (DE); TROMMER, Martin, 06749 Bitterfeld (DE)
(74) Vertreter: Gille Hrabal
(86) Internationale Anmeldenummer: PCT/EP2016/053311
(87) Internationale Veröffentlichungsnummer: WO 2016/131849

(56) Entgegenhaltungen:
- EP-A1- 0 765 845
- EP-A1- 1 057 792
- WO-A1-98/47946
- JP-A- S5 313 438
- US-A- 5 707 415

## Beschreibung

Die vorliegende Erfindung betrifft ein Verfahren zur Herstellung von synthetischem Quarzglas sowie eine Vorrichtung zur Herstellung von synthetischem Quarzglas, die im Rahmen des erfindungsgemäßen Verfahrens verwendet werden kann. Das erfindungsgemäße Verfahren und die erfindungsgemäße Vorrichtung sind durch einen speziellen Membranfilter gekennzeichnet.

Zur Herstellung von synthetischem Quarzglas werden aus einer siliziumhaltigen Ausgangssubstanz in einem CVD-Verfahren durch Hydrolyse oder Oxidation SiO₂-Partikel erzeugt und auf einem sich bewegenden Träger abgeschieden. Es kann dabei zwischen Außen- und Innenabscheideverfahren unterschieden werden. Bei Außenabscheideverfahren werden die SiO₂-Partikel auf der Außenseite eines rotierenden Trägers aufgebracht. Als Beispiele für entsprechende Außenabscheideverfahren seien das so genannte OVD-Verfahren (Outside Vapour Phase Deposition), das VAD-Verfahren (Vapour Phase Axial Deposition) oder das PECVD-Verfahren (Plasma Enhanced Chemical Vapour Deposition) genannt. Als bekanntestes Beispiel für ein Innenabscheideverfahren sei das MCVD-Verfahren (Modified Chemical Vapour Deposition) genannt, bei dem auf der Innenwandung eines von außen erhitzten Rohres SiO₂-Partikel abgeschieden werden.

Bei hinreichend hoher Temperatur im Bereich der Trägeroberfläche kommt es zu einem unmittelbaren Verglasen der SiO₂-Partikel, was auch als "Direktverglasen" bekannt ist. Im Unterschied dazu ist beim so genannten "Sootverfahren" die Temperatur beim Abscheiden der SiO₂-Partikel so niedrig, dass eine poröse SiO₂-Sootschicht erhalten wird, die dann in einem separaten Verfahrensschritt zu transparentem Quarzglas gesintert wird. Sowohl das Direktverglasungsverfahren als auch das Sootverfahren führen zu einem dichten, transparenten, hochreinen, synthetischen Quarzglas.

Aus dem Stand der Technik ist als siliziumhaltiges Einsatzmaterial für die Herstellung von synthetischem Quarzglas beispielsweise Siliziumtetrachlorid (SiCl₄) bekannt. Siliziumtetrachlorid und andere analoge chlorhaltige Substanzen zeigen bei moderaten Temperaturen unter 100 °C bereits ausreichend hohe Dampfdrücke, so dass etwaige Verunreinigungen üblicherweise in der Flüssigphase verbleiben und die Herstellung von hochreinen Sootkörpern erleichtert wird.

Allerdings ist bekannt, dass bei der Verdampfung des Siliziumtetrachlorids teilweise Flüssigkeitstropfen mit dem verwendeten Inertgasstrom mitgerissen werden und bis zum Erreichen der Reaktionszone nicht vollständig verdampfen. Damit gelangen die in der Flüssigphase enthaltenen Verunreinigungen letztendlich dennoch in den Sootkörper und verschlechtern damit die Qualität des daraus hergestellten Quarzglases. Bei den Verunreinigungen handelt es sich normalerweise um Metalle.

Ein weiterer Nachteil der chlorhaltigen Einsatzmaterialien wie Siliziumtetrachlorid ist, dass bei deren Umsetzung zu synthetischem Quarzglas Salzsäure entsteht, die hohe Kosten bei der Abgaswäsche und Entsorgung verursacht. Grundsätzlich werden daher beim Einsatz von Siliziumtetrachlorid Vorrichtungen verwendet, welche den Eintrag von Feuchtigkeit vermeiden. Dies reduziert zum einen die Bildung von Salzsäure und zum anderen wird die Bildung von Kieselsäure vermieden. Diese Vorgehensweise ist dem Fachmann vertraut.

Um diese Anforderungen zu umgehen, wurde in der Vergangenheit eine Vielzahl sogenannter chlorfreier Organosiliziumverbindungen als Ausgangsmaterial für die Quarzglasherstellung erprobt. Als Beispiel seien Monosilane, Alkoxysilane, Siloxane und Silazane genannt. Eine besonders interessante Gruppe dieser sogenannten chlorfreien Organosiliziumverbindungen bilden die Polyalkylsiloxane (auch kurz als "Siloxane" bezeichnet), die beispielsweise aus der DE 30 16 010 A1 bekannt sind. Insbesondere die unter die Polyalkylsiloxane subsumierbaren zyklischen Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt. Aufgrund der großtechnischen Verfügbarkeit in hoher Reinheit wird insbesondere Octamethylcyclotetrasiloxan (OMCTS) eingesetzt.

Derartige Polyalkylsiloxanverbindungen sind polymerisierbar und liegen im Einsatzmaterial in Reinform oder als Gemisch mit anderen Komponenten typischerweise in flüssiger Form vor. Dabei können diese Verbindungen in Spuren auch polymerisierbare Silanole enthalten. Die Polyalkylsiloxanverbindungen können dem Verbraucher, wie etwa einem Abscheidebrenner, in flüssiger Form zugeführt und am Brennerausgang bzw. in der Flamme versprüht werden. In der Regel wird das flüssige Einsatzmaterial aber mittels eines Verdampfers in eine gasförmige oder dampfförmige Phase überführt und dem Verbraucher als kontinuierlicher Gasstrom über ein Leitungssystem zugeführt.

Basierend auf diesen sogenannten chlorfreien Ausgangsmaterialien sind in dem Stand der Technik einige Verfahren zur Herstellung von synthetischem Quarzglas beschrieben. Beispielsweise wird auf die Druckschriften EP 0 760 373 A, WO 99/15468 A, WO 99/54259 A, WO 2013/092553 A und EP 0 529 189 A verwiesen.

Im grundlegenden Unterschied zu den oben beschriebenen Verfahren, bei denen die niedermolekularen metallischen Verunreinigungen im Siliziumtetrachlorid die Qualität des resultierenden Quarzglases mindern und gleichzeitig der Eintrag von Feuchtigkeit vermieden wird, bringt die Verwendung von Polyalkylsiloxanen jedoch andere Problematiken in Bezug auf mögliche Einflüsse von Verunreinigungen des Ausgangsmaterials auf die Qualität des resultierenden Quarzglases mit sich. Grundsätzlich ist Siliziumtetrachlorid thermisch stabiler als die cyclischen Polyalklysiloxane und ihr Siedepunkt ist viel niedriger. Dagegen regieren die cyclischen Polyalkylsiloxane bei Raumtemperatur nahezu nicht mit Feuchtigkeit. Eines der Hauptprobleme bei der Verwendung von cyclischen Polyalkylsiloxanen liegt jedoch darin, dass unter den anzuwendenden Verdampfungsbedingungen Polymerisationen unter Ausbildung von gelartigen und gummiartigen Rückständen stattfinden. Wie oben bereits dargelegt, ist es bekannt, dass Polyalkylsiloxane in Spuren polare Verunreinigungen wie Wasser, Silanole und manchmal auch polymerisations-katalytisch wirkende Spurenbestandteile (z. B. Lewis Säuren oder Lewis-Basen) enthalten können. Diese Verunreinigungen können im Fall der Silanole unter Verdampfungsbedingungen entweder mit sich selbst unter Ausbildung von Polymeren reagieren oder mit der Ausgangsverbindung Ringöffnungsreaktionen initiieren, Dies führt letztlich zur Bildung der genannten polymeren Siloxanrückstände und Gele. Diese Polymere und Gele verbleiben üblicherweise im Verdampfer, in den Dampfleitungen, Regelventilen, Drosseln, sonstigen Gasdosiereinrichtungen und Leitungen zurück und konzentrieren sich hier auf. Dies kann zu einer massiven Beeinträchtigung des Regelverhaltens der Stoffströme führen. Eine reproduzierbare Prozessführung wird damit massiv erschwert. Im Extremfall führt dies sogar zu Verstopfungen. Beide Auswirkungen erhöhen die Stillstandszeit für Wartungs- und Reinigungsschritte -, wodurch ein Verfahren unter Verwendung von Polyalkylsiloxanen entsprechende Kosten mit sich zieht.

Zum anderen haben diese Rückstände auch negative Auswirkungen auf die Eigenschaften des resultierenden Quarzglases, da die Gleichverteilung der Massenströme des Einsatzmaterialdampfes unkontrollierbar und damit nicht reproduzierbar beeinflusst wird. Damit werden die radiale und axiale Dichtevariation im Soot und die Variation im Chlorgehalt im nachfolgenden Dehydratisierungs- bzw. Chlorierungsschritt erhöht. Weiterhin führen derartige Rückstände zu einer Erhöhung der Außendurchmesser-Variation in einem Multibrennerverfahren. Dies wiederum hat Auswirkung auf den Ausschuss verbunden mit entsprechenden Materialverlusten. Die Folge ist eine schlechtere Prozesseffizienz verbunden mit erhöhten Herstellungskosten. Zusätzlich kommt hinzu, dass das Ausgangsmaterial an sich meist schon gewissen Chargenschwankungen unterliegt, die zwar im ppm-Bereich liegen, aber dennoch zu der oben beschriebenen mangelnden Kontrollierbarkeit und Reproduzierbarkeit des Prozesses beitragen. Auch haben Rohmaterialen unterschiedlicher Hersteller unterschiedliche Verunreinigungen/Verunreinigungsgrade, so dass keine Kontrolle über die Qualität des resultierenden Quarzglases gewährleistet ist.

Die Folge ist eine schlechtere Prozesseffizienz verbunden mit erhöhten Herstellungskosten. Zusätzlich kommt hinzu, dass das Ausgangsmaterial an sich meist schon gewissen Chargenschwankungen unterliegt, die zwar im ppm-Bereich liegen, aber dennoch zu der oben beschriebenen mangenden Kontrollierbarkeit und Reproduzierbarkeit des Prozesses beitragen. Als weiteren Stand der Technik, welcher das Problem der Gelbildung bei dem Verdampfen von Polyalkylsiloxanen betrifft, sind zu nennen US 5,879,649, EP 1 094 990 A, WO 2013/092553 A, EP 0 463 045 A, US 5,970,751, und US 2012/0276291 A.

US 5707,415 offenbart ein Verfahren zur Herstellung von synthetischem Quarzglas, in welchem eine polymerisierbare Polysiloxanverbindung verdampft und gereinigt wird und durch Oxidation und/oder Hydrolyse zu SiO₂-Tehchen umgesetzt wird.

Zur Lösung des Problems der Gelbildung schlägt die US 5,558,687 vor, die Polyalkylsiloxan-Komponente zunächst zu versprühen und dabei teilweise flüssig auf ein Packungsmaterial aufzubringen. Eine ähnliche Verfahrensweise wird in EP 0 765 845 A im Zusammenhang mit der Verwendung von Siliziumtetrachlorid beschrieben.

Die im Stand der Technik aufgezeigten Lösungsmöglichkeiten sind bisher immer noch nicht befriedigend und daher stellt sich die vorliegende Erfindung die Aufgabe, ein erfindungsgemäßes Verfahren bereitzustellen, mit welchem die Gelbildung bei der Herstellung von synthetischem Quarzglas reduziert wird.

Des Weiteren stellt sich die vorliegende Erfindung die Aufgabe, ein Verfahren und eine Vorrichtung zur Herstellung von synthetischem Quarzglas bereitzustellen, bei welchen die Massenströme des Einsatzmaterialdampfes im Wesentlichen kontrollierbar und damit reproduzierbar sind.

Eine weitere Aufgabe der vorliegenden Erfindung ist die Bereitstellung eines Verfahrens und einer Vorrichtung zur Herstellung von synthetischem Quarzglas, bei welchen insbesondere die radiale und axiale Dichtevariation im Soot und die Variation im Chlorgehalt im nachfolgenden Dehydratisierungs- bzw. Chlorierungsschritt erniedrigt werden.

Eine weitere Aufgabe der vorliegenden Erfindung ist die Bereitstellung eines Verfahrens und einer Vorrichtung zur Herstellung von synthetischem Quarzglas, bei welchen insbesondere die Außendurchmesser-Variation in einem Multibrennerverfahren verringert wird.

Gelöst werden diese Aufgaben durch das im Folgenden beschriebene erfindungsgemäße Verfahren zur Herstellung von synthetischem Quarzglas sowie die erfindungsgemäße Vorrichtung, die in dem Verfahren Verwendung findet und die ebenfalls nachstehend beschrieben wird.

Erfindungsgemäß wird ein Verfahren zur Herstellung von synthetischem Quarzglas bereitgestellt, welches die folgenden Verfahrensschritte umfasst:
(a) Verdampfen eines Einsatzmaterials, das mindestens eine polymerisierbare Polyalkylsiloxanverbindung enthält, unter Bildung eines Einsatzmaterialdampfes;
(b) Durchleiten des aus Verfahrensschritt (a) resultierenden Einsatzmaterialdampfes durch mindestens eine Reinigungsvorrichtung, um den Einsatzmaterialdampf zu reinigen;
(c) Zuführen des aus Verfahrensschritt (b) resultierenden gereinigten Einsatzmaterialdampfes zu einer Reaktionszone, in dem der Einsatzmaterialdampf durch Oxidation und/oder durch Hydrolyse zu SiO₂-Partikeln umgesetzt wird; und
(d) Abscheiden der aus Verfahrensschritt (c) resultierenden SiO₂-Partikel auf einer Ablagerungsfläche; und
(e) gegebenenfalls Trocknen und Verglasen der aus Verfahrensschritt (d) resultierenden SiO₂-Partikel unter Bildung von synthetischem Quarzglas.

Das erfindungsgemäße Verfahren ist dann dadurch gekennzeichnet, dass die mindestens eine Polyalkylsiloxanverbindung in dem Verfahrensschritt (b) durch einen Membranfilter geleitet wird, der auf eine Temperatur von 130 bis 210 °C erwärmt ist.

Es wurde überraschenderweise festgestellt, dass der Einsatz eines Membranfilters, der bei einer Temperatur von 130 bis 210 °C betrieben wird, dazu führt, dass die Neigung des Einsatzmaterialdampfes, zu polymerisieren und/oder Gele zu bilden, reduziert wird.

Dies ist insbesondere überraschend, als dass im Stand der Technik beschrieben wird, dass zum einen die die Polymerisation verursachenden Verunreinigungen nicht flüchtig sind und daher aus der flüssigen Phase abgetrennt werden müssen. Zum anderen ist dies überraschend, da die oligomeren und/oder polymeren Bestandteile, welche bei der Verdampfung entstanden sind, durch die Verwendung eines Membranfilters insoweit abgetrennt werden können, ohne dass der Membranfilter einer Verstopfung durch Polymerablagerungen und/oder Gelbildung unterliegt.

Dies führt überraschenderweise dazu, dass insgesamt der Druckabfall über den Membranfilter gering, insbesondere verfahrenstechnisch und wirtschaftlich sinnvoll bleibt, und dass auf einen aufwendigen, vorgeschalteten Flüssigkeits-/Feststoff-Extraktionsprozess in der flüssigen Phase verzichtet werden kann.

Ohne an eine Theorie gebunden sein zu wollen, wird vermutet, dass verschiedene Arten von Spurenverunreinigungen im Einsatzmaterial enthalten sind, die Rückstände im Verdampfer und in der Dampfleitung verursachen können.

### A) Hochsiedende Spurenverunreinigungen

Diese sind dadurch gekennzeichnet, dass sie sich viel schwerer Verdampfen lassen und aufgrund ihres sehr geringen Dampfdruckes bzw. geringen Taupunkts im Verdampfer und in den Verdampferleitungen zurückbleiben können und sich bei langer Verweilzeit im Dampfleitungssystem zu gelartigen Rückständen verlinken.

### B) Polare Spurenverunreinigungen

Solche reaktiven Spurenverunreinigungen können zum Beispiel die oben genannten Silanole darstellen. Diese Spurenverunreinigungen können aufgrund ihrer polaren OH-Gruppen die Ringöffnungsreaktionen der cyclischen Siloxane initiieren. Sie können über eine Kondensationsreaktion mit den cyclischen Hauptbestandteilen zu höher siedenden Verunreinigungen reagieren, die sich dann ebenfalls als gelartige Verunreinigungen in der Dampfleitung anreichern.

### C) Katalytisch wirkende Spurenverunreinigungen

Reaktive katalytisch wirkende Spurenverunreinigungen sind z. B. Lewis-Säuren und Lewis-Basen. Diese Verbindungen können in Gegenwart von Spuren an Restfeuchte Ringöffnungsreaktionen initiieren. Dies können z. B. auch metallische Spurenverunreinigungen (Metalloxide und/oder Metallhalogenide) sein, die ebenfalls an den Ringöffnungsreaktionen der cyclischen Siloxane teilnehmen. Über weitere Reaktion mit den cyclischen Hauptbestandteilen können höher siedenden Verunreinigungen entstehen, die sich dann ebenfalls als gelartige Verunreinigungen in der Dampfleitung anreichern.

Die hochsiedenden Spurenverunreinigungen unter A) als auch die polymeren Folgeprodukte, die aus der Reaktion der reaktiven Spurenverunreinigungen unter B) und C) (z. B. Silanole, Lewis-Säuren und Lewis-Basen) mit dem Rohmaterial entstehen und die mobil sind und sich in der Dampfphase an Drosseln, Regelventilen und dergleichen anlagern, lassen sich überraschenderweise und erfindungsgemäß aus dem Rohmaterialdampf besonders effektiv und wirkungsvoll entfernen, wenn das Einsatzmaterial in Form eines Einsatzmaterialdampfes durch eine beheizte Reinigungsvorrichtung geleitet wird, welche einen erfindungsgemäßen Membranfilter aufweist.

Das erfindungsgemäße Verfahren bzw. die erfindungsgemäße Vorrichtung, die weiter unten beschrieben wird, eignen sich daher insbesondere zur Herstellung von synthetischem Quarzglas, wobei in dem Herstellungsprozess durch den erfindungsgemäßen Membranfilter die hochsiedenden Spurenverunreinigungen unter A) und/oder die polymeren Folgeprodukte, die aus der Reaktion der reaktiven Spurenverunreinigungen unter B) und/oder C) mit dem Rohmaterial entstehen, entfernt werden.

Mittels des erfindungsgemäß vorgesehenen Membranfilters lassen sich somit die hochsiedenden Spurenverunreinigungen unter A) und insbesondere die mobilen polymeren Folgeprodukte, die aus der Reaktion der Spurenverunreinigungen B) und C) mit dem Einsatzstoff entstehen, zurückhalten, so dass sich im Nachgang deutlich weniger störende Ablagerungen an den empfindlichen Drosseln und Regelventilen bilden können. Somit lassen sich Chargenunterschiede in den Ausgangsverbindungen ausgleichen, so dass das hergestellte synthetische Quarzglas insgesamt eine gleichbleibend gute Qualität aufweist. Zusammen mit der Tatsache, dass durch die Verminderung und/oder Vermeidung von Polymer- und/oder Gelablagerung in den Dampfleitungen, Regelventilen, Drosseln, sonstigen Gasdosiereinrichtungen und Leitungen insgesamt eine Gleichverteilung der Massenströme erreicht werden kann, kann somit durch den Gegenstand der Erfindung das Verfahren kontrolliert und reproduzierbar durchgeführt werden. Dies führt, wie oben dargelegt, zu einer signifikanten Kostenersparnis.

Im Folgenden werden nun die einzelnen Verfahrensschritte des erfindungsgemäßen Verfahrens näher erläutert.

Erfindungsgemäß wird unter dem Begriff "umfassen" bevorzugt "bestehen aus" verstanden.

### Verfahrensschritt (a) - Verdampfen des Einsatzmaterials

Im Verfahrensschritt (a) wird ein Einsatzmaterial, das mindestens eine polymerisierbare Polyalkylsiloxanverbindung enthält, unter Bildung eines Einsatzmaterialdampfes verdampft.

Grundsätzlich kann erfindungsgemäß jede polymerisierbare Polyalkylsiloxanverbindung, welche sich zur Herstellung von synthetischem Quarzglas eignet, verwendet werden. Im Rahmen der Erfindung umfasst der Begriff Polyalkylsiloxan sowohl lineare (umfassend auch verzweigte Strukturen) als auch zyklische Molekularstrukturen.

Besonders geeignete cyclische Vertreter sind Polyalkylsiloxane mit der allgemeinen Summenformel

SiₚOₚ(R)₂ₚ,

wobei p eine ganze Zahl größer gleich 2 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt.

Die Polyalkylsiloxanverbindung ist dabei vorzugsweise ausgewählt aus der Gruppe, bestehend aus Hexamethylcyclotrisiloxan (D3), Octamethylcyclotetrasiloxan (D4), Dekamethylcyclopentasiloxan (D5), Dodecamethylcyclohexasiloxan (D6), Tetradekamethylcycloheptasiloxan (D7), Hexadecamethylcyclooctasiloxan (D8) sowie deren linearen Homologen und beliebigen Mischungen der vorgenannten Verbindungen. Die Notation D3, D4, D6, D7 und D8 entstammt dabei einer von General Electric Inc. eingeführten Notation, bei der "D" die Gruppe [(CH₃)₂Si]-O- repräsentiert. Die Notation ist den auf dem Fachgebiet tätigen Personen bekannt.

Im Rahmen der vorliegenden Erfindung können auch Mischungen der vorgenannten Polyalkylsiloxanverbindungen verwendet werden.

Wegen der großtechnischen Verfügbarkeit in hoher Reinheit wird derzeit Octamethylcyclotetrasiloxan (OMCTS) bevorzugt eingesetzt. Im Rahmen der vorliegenden Erfindung ist es daher insbesondere bevorzugt, wenn es sich bei der Polyalkylsiloxanverbindung um Octamethylcyclotetrasiloxan (D4) handelt.

Grundsätzlich ist es möglich, dass das Einsatzmaterial vor dem Einbringen in den Verfahrensschritt (a) einer Aufreinigung unterzogen wird. Dem Fachmann sind solche Aufreinigungsverfahren bekannt. In einer bevorzugten Ausführungsform wird das Einsatzmaterial jedoch zuvor keinem vorgeschalteten, gesonderten Aufreinigungsverfahren unterzogen. Dies bedeutet, dass das Einsatzmaterial bevorzugt keinem Verfahren unterworfen wird, bei dem aus dem kommerziell erhältlichen Produkt eine Verunreinigung entfernt wird. Bevorzugt wird dabei keine der Verunreinigungen A) bis C), wie oben beschrieben, entfernt. Ganz besonders bevorzugt ist das erfindungsgemäße Verfahren dadurch gekennzeichnet, dass das flüssige Einsatzmaterial der mindestens einen polymerisierbaren Polyalkylsiloxanverbindung vor und/oder während der Verdampfung keiner Festphasenextraktion ausgesetzt wird. Dabei wird das Einsatzmaterial bevorzugt keiner Flüssig-/Festphasenextraktion unterzogen. Es hat sich überraschenderweise herausgestellt, dass durch das erfindungsgemäße Verfahren dennoch Quarzglas mit einer hohen Kontrollierbarkeit und Reproduzierbarkeit hergestellt werden kann. Insbesondere dadurch, dass ein zusätzlicher Reinigungsschritt entfallen kann, können durch das erfindungsgemäße Verfahren bzw. die weiter unten beschriebene erfindungsgemäße Vorrichtung Kosten durch Zeitersparnis und Reduzierung der Stillstandszeiten erzielt werden.

Zudem kann, wenn das Einsatzmaterial insbesondere keiner Flüssig-/Festphasenextraktion unterzogen wird, vermieden werden, dass, wie oben näher erläutert, zusätzliche Verunreinigungen aus der Festphase in das Einsatzmaterial gelangen.

Die Verdampfung des Einsatzmaterials kann mit oder ohne Anwesenheit einer Trägergas-Komponente erfolgen. Bevorzugt erfolgt die Verdampfung des Einsatzmaterials in Anwesenheit eines Trägergases, da dadurch die Verdampfung bei Temperaturen unterhalb des Siedepunktes der Polyalkylsiloxanverbindung erfolgen kann. Dies bedeutet, dass der Einsatzmaterialdampf bevorzugt zusätzlich ein Trägergas umfasst. Eine solche Vorgehensweise ist bevorzugt, wenn die Verdampfung des Einsatzmaterials unterhalb seines Siedepunktes stattfinden soll. Das Inertgas ist bevorzugt chemisch inert und ist weiter bevorzugt Stickstoff oder Argon. Alternativ kann als Trägergas auch Sauerstoff verwendet werden. Dabei liegt das Molverhältnis der polymerisierbaren Polyalkylsiloxanverbindung zum Trägergas bevorzugt im Bereich von 0,01 bis 2, besonders bevorzugt im Bereich von 0,02 bis 1,5 ganz besonders bevorzugt im Bereich von 0,05 bis 1,25. Insbesondere ist es bevorzugt, dass als Trägergas Stickstoff mit einem Feuchtegehalt von kleiner 40 Volumen-ppm und als Polyalkylsiloxanverbindung OMCTS eingesetzt wird. Dabei ist es des Weiteren bevorzugt, dass das molekulare Verhältnis von OMCTS zu Stickstoff im Bereich von 0,015 bis 1,5 liegt.

Der Verfahrensschritt des Verdampfens ist dem Fachmann an sich bekannt. Dabei wird die Polyalkylsiloxanverbindung je nach gewähltem molekularem Verhältnis der Polyalkylsiloxanverbindung und Trägergas vorzugsweise bei Temperaturen zwischen 120 und 200 °C in eine dampfförmige Phase überführt. Dabei sollte die Verdampfungstemperatur in der Verdampfungskammer immer mindestens einige Grad oberhalb des Taupunktes der Polyalkylsiloxanverbindung sein. Der Taupunkt ist wiederum abhängig vom gewählten molekularen Verhältnis aus Polyalkylsiloxanverbindung und Trägergas. In einer bevorzugten Ausführungsform wird dazu die Polyalkylsiloxanverbindung vor dem Verdampfen auf Temperaturen zwischen 40 und 120 °C vorerwärmt und anschließend in eine Verdampfungskammer versprüht, die eine höhere Temperatur als die Vorerwärmung der Einsatzstoffe aufweist. Das inerte Trägergas kann in einer bevorzugten Ausführungsform zusätzlich auf Temperaturen von bis zu 250 °C vorerwärmt werden, bevor es der Verdampfungskammer zugeführt wird. Von Vorteil ist, dass die Temperatur in der Verdampfungskammer im Mittel immer oberhalb der Taupunktstemperatur der Mischung aus Polyalkylsiloxan und Trägergas liegt. Geeignete Verdampfungsverfahren werden z. B. in den Internationalen Patentanmeldungen WO 2013/087751 A und WO 2014/187513 A sowie der deutschen Patentanmeldung DE 10 2013 209 673 A beschrieben.

Im Rahmen der Erfindung beschreibt der Begriff "Taupunkt" die Temperatur, bei der sich ein Gleichgewichtszustand von kondensierender und verdunstender Flüssigkeit einstellt.

Bei der Verwendung von Temperaturen unterhalb des Siedepunkts des Einsatzmaterials erfolgt die Verdampfung bevorzugt zusammen mit einem inerten Trägergas.

Im Rahmen der vorliegenden Erfindung wird unter einer "Verdampfung" der Vorgang verstanden, bei der das Einsatzmaterial im Wesentlichen von der flüssigen Phase in eine gasförmige Phase überführt wird. Dies geschieht bevorzugt, indem, wie oben beschrieben, Temperaturen verwendet werden, welche oberhalb des Taupunktes der polymerisierbaren Polyalkylsiloxanverbindung als Hauptkomponente des Einsatzmaterials liegen. Dem Fachmann ist dabei bewusst, dass verfahrenstechnisch nicht ausgeschlossen werden kann, dass kleine Flüssigkeitstropfen des Einsatzmaterials mitgerissen werden können. Somit wird im Verfahrensschritt (a) bevorzugt ein Einsatzmaterialdampf erzeugt, welcher vorzugsweise nicht weniger als 97 Mol.-%, bevorzugt nicht weniger als 98 Mol.-%, besonders bevorzugt nicht weniger als 99 Mol.-%, ganz besonders bevorzugt nicht weniger als 99,9 Mol.%, gasförmige Bestandteile enthält.

Der durch den Verfahrensschritt (a) erzeugte Einsatzmaterialdampf wird im Anschluss dem Verfahrensschritt (b) zugeleitet.

### Verfahrensschritt (b) - Reinigung des Einsatzmaterialdampfes

In dem Verfahrensschritt (b) wird der aus Verfahrensschritt (a) resultierende Einsatzmaterialdampf durch mindestens eine Reinigungsvorrichtung durchgeleitet, um den Einsatzmaterialdampf zu reinigen. Dabei umfasst die Reinigungsvorrichtung des Verfahrensschritts (b) einen Membranfilter, der auf eine Temperatur von 130 bis 210 °C erwärmt ist.

Im Rahmen der vorliegenden Erfindung handelt es sich bei der Temperatur, auf welchen der Membranfilter erwärmt ist, um die Temperatur der Filtermembran und/oder des Stützkörpers, in dem die Membran mechanisch stabil gehalten bzw. getragen wird.

Die Temperaturauswahl für den Betrieb der entsprechenden Membran ist zielgerichtet, da sich erfindungsgemäß herausgestellt hat, dass wenn die Temperatur zu kalt ist, d.h. insbesondere die Temperatur von 130 °C unterschreitet, das verdampfte Polyalkylsiloxan wieder kondensiert. Wie dem Fachmann bekannt ist, hängt der Taupunkt des verdampften Polyalkylsiloxans vom Molverhältnis von eingesetzter Trägergasmenge und verdampften Polyalkylsiloxans sowie dem vorliegenden Absolutdruck im Verdampfungssystem ab. Bei Unterschreitung des Taupunkts am Membranfilter wird die Membran mit einem Flüssigkeitsfilm belegt und blockiert damit den Dampffluss. Andererseits besteht bei hohen Temperaturen, insbesondere bei Temperaturen oberhalb von 210 °C, die Gefahr, dass sich die Struktur der Membran durch thermische Verformung verändert somit unbrauchbar wird.

In einer bevorzugten Ausführungsform wird der Membranfilter auf eine Temperatur von 140 bis 190 °C erwärmt. Des Weiteren ist es unabhängig von der Temperatur bevorzugt, dass der Membranfilter auf eine Temperatur erwärmt ist, die um 3 bis 80 °C, insbesondere 3 bis 60 °C, weiter bevorzugt 7 bis 40 °C, höher ist als der Taupunkt der verwendeten Polyalkylsiloxanverbindung, der sich im Dampfgemisch aus eingesetzter Trägergasmenge und dampfförmiger Polyalkylsiloxanverbindung einstellt, da andernfalls eine dauerhafte Verwendung der Membran in einem kontinuierlichen Verfahren nicht gewährleistet sein kann.

Des Weiteren hat sich als bevorzugt herausgestellt, wenn die mittlere Porengröße des Membranfilters bis zu 0,5 µm, weiter bevorzugt bis 0,2 µm, noch weiter bevorzugt bis 0,02 µm, beträgt.

Im Rahmen der vorliegenden Erfindung ist es insbesondere bevorzugt, wenn der Membranfilter mindestens ein Material, ausgewählt aus der Gruppe, bestehend aus Polytetrafluorethylen, Perfluoralkoxypolymeren (PFA), Perfluoralkoxyvinylethern oder Polyethersulfonen, umfasst oder aus einem oder mehreren der vorgenannten Materialien besteht. Ein kommerziell geeignetes Membransystem ist beispielsweise der Membranfilter UltiKleen™-CDS Filter der Firma Pall Microelectronics.

Die erfindungsgemäß geeigneten Membranfilter können mit Hinblick auf ihre Größe mit dem Fachmann üblicherweise bekannten Maßnahmen an die entsprechende verwendete Vorrichtung angepasst werden. Üblicherweise werden Membranfilter verwendet, die eine mittlere maximale Dicke des Membranfilters parallel zur Durchflussrichtung des Einsatzgasstroms von weniger als 200 µm, weiter bevorzugt von weniger als 100 µm, noch weiter bevorzugt von weniger als 50 µm, aufweisen. Erfindungsgemäß ist die Membranfläche so groß wie möglich zu wählen, da mit zunehmender Membranfläche mehr Polymere aufgenommen werden können. Besonders bevorzugt wird eine Membrangröße gewählt, die einen auf OMCTS bezogenen Durchsatz von 0,5 bis 500 kg/h pro m² Membranfläche, weiter bevorzugt von 1 bis 400 kg/h pro m² Membranfläche, gewährleistet.

Im Rahmen des erfindungsgemäßen Verfahrens ist es darüber hinaus bevorzugt, wenn die Druckdifferenz an der Filtermembran zwischen Retentat- und Permeatseite weniger als 800 mbar, weiter bevorzugt weniger als 600 mbar, noch weiter bevorzugt weniger als 400 mbar, beträgt. Es hat sich herausgestellt, dass wenn der Differenzdruck zwischen Retentat- und Permeatseite zu hoch ist, die Gefahr besteht, dass die an der Membran zurückgehaltenen "mobilen" Polymere durch die Membran quasi durchgedrückt werden. Deswegen sollte man sicherstellen, dass der Differenzdruck zwischen Retentat- und Permeatseite nicht zu hoch ist und bevorzugt in dem zuvor definierten Bereichen liegt.

Ohne an eine Theorie gebunden sein zu wollen, wird davon ausgegangen, dass es bei dem erfindungsgemäßen Verfahren zu einer Polymerbildung von im Wesentlichen hochgradig vernetzten Polymeren und im Wesentlichen weniger stark vernetzten Polymeren kommt. Während die im Wesentlichen hochgradig vernetzten Polymere in der Regel im Verdampferbereich festsitzen, sich beispielsweise an der Rohrwandung oder Verdampferwand als klebrige, gummiartige Schicht bzw. Masse ausbilden, weisen die weniger stark vernetzten Polymere eine noch ausreichende Mobilität auf und können im Dampfstrom weiter befördert werden und so an die empfindlichen Drosseln und Regelventile gelangen. Das erfindungsgemäße Verfahren eignet sich daher insbesondere zu der Entfernung von im Wesentlichen weniger stark vernetzten Polymeren aus dem Einsatzmaterialdampf bei der Herstellung von Quarzglas.

Daher eignet sich das erfindungsgemäße Verfahren in einer ersten Ausgestaltung insbesondere für die Abtrennung von Polymethylsiloxanen, die aus den hochsiedenden Spurenverunreinigungen unter A), wie obenstehend definiert, entstehen.

In einer zweiten Ausgestaltung eignet sich das erfindungsgemäße Verfahren insbesondere für die Abtrennung von Polymethylsiloxanen, die aus der Reaktion der Spurenverunreinigungen B) und C) mit dem Einsatzstoff entstehen.

Die mit dem erfindungsgemäßen Verfahren abzutrennenden Polymethylsiloxane gemäß der ersten und der zweiten Ausgestaltungen weisen vorzugsweise ein Molekulargewicht von 500 bis 1800 g/mol auf. Normalerweise würde man erwarten, dass Polyalkylsiloxane mit derartigen Molekulargewichten in der Gasphase die erfindungsgemäß vorgesehene Membran passieren. Ohne an die Theorie gebunden sein zu wollen, wird jedoch vermutet, dass die aus der Reaktion der Spurenverunreinigungen B) und C) hervorgehenden Polyalkylsiloxane, möglicherweise aufgrund des sehr niedrigen Dampfdruckes, in Form von Mikrotröpfchen an der Membran zurückgehalten werden und mit zunehmender Verweilzeit unter Ausbildung von Polymeren an der Membran haften bleiben. Nach hinreichend langer Einsatzzeit findet man auf der Membran flächige Ablagerungen von Polymerfilmen, bestehend aus Polyakylsiloxanen.

Insbesondere diese Polymethylsiloxane vernetzen an der Membran mit zunehmender Verweilzeit weiter zu Polymethylsiloxanen mit Molekulargewichten von vorzugsweise mehr als 1800 g/mol. Bei diesen oligomeren bzw. polymeren Polymethylsiloxanen handelt es sich üblicherweise um zyklische als auch lineare Polyalkysiloxane. Es können zyklische Polymethylsiloxane sein, beispielsweise D8, D9, D10, und D11. Es können aber auch lineare Polymethylsiloxane sein, deren endständige Si-Atome beispielsweise eine Trimethylsilyl-Gruppe oder eine Dimethylsilanol-Gruppe sein können.

Während es zu einer guten Aufreinigung des Einsatzmaterialdampfs kommt, wodurch eine Gel- und Polymerbildung innerhalb der nachfolgenden Vorrichtungen vermieden werden kann und was zu einer guten Kontrollierbarkeit und Reproduzierbarkeit der Quarzglasherstellung führt, ist die Verwendung eines entsprechenden Membranfilters besonders langlebig und beeinträchtigt insbesondere durch einen nur geringen Druckabfall über die Packung den gesamten Verfahrensablauf der Quarzglaseinstellung nur minimal. Der somit selten erforderliche Wechsel des Membranfilters führt zu geringen Stillstandszeiten. Zudem ist die Reinigungsvorrichtung apparativ einfach und kann sogar in bestehende Vorrichtungen zur Quarzglasherstellung nachträglich integriert werden.

Erfindungsgemäß beträgt die Anströmgeschwindigkeit des Einsatzmaterialdampfes aus Verfahrensschritt (a) in den Reinigungsschritt mit dem Membranfilter bevorzugt 0,01 bis 2 m/s, besonders bevorzugt 0,02 bis 1 m/s. Bei diesen Geschwindigkeiten kann trotz des hohen Durchsatzes noch eine gute Reinigungsleistung erzielt werden.

Dabei sollte der Einsatzmaterialdampf im Verfahrensschritt (b) eine Temperatur von mehr als 100 °C, bevorzugt mehr als 120 °C und besonders bevorzugt von mehr als 130 °C aufweisen. Dadurch wird gewährleistet, dass das Einsatzmaterial im Wesentlich in der Dampfform verbleibt. Gegebenenfalls können hierzu apparativ zusätzliche Heizvorrichtungen vorgesehen sein, um diese Temperatur des Einsatzmaterialdampfes zu gewährleisten.

Erfindungsgemäß werden insbesondere die mobilen polymeren Folgeprodukte, die aus der Reaktion der Spurenverunreinigungen B) und C) mit dem Einsatzstoff entstehen, an der Membran überwiegend zurückgehalten, so dass sich im Nachgang deutlich weniger störende Ablagerungen an den empfindlichen Drosseln und Regelventilen ablagern können. Insbesondere kann mit dem erfindungsgemäßen Reinigungsschritt (b) ein Einsatzmaterialdampf zur Verfügung gestellt werden, welcher eine reproduzierbar konstante Zusammensetzung aufweist. Dadurch haben insbesondere Chargenschwankungen im flüssigen Einsatzmaterial keinen Einfluss auf die Qualität des resultierenden synthetischen Quarzglases.

### Verfahrensschritt (c) - Umsetzung des Einsatzmaterialdampfes

Im Verfahrensschritt (c) wird der aus Verfahrensschritt (b) resultierende gereinigte Einsatzmaterialdampf zu einer Reaktionszone geführt, in dem der Einsatzmaterialdampf durch Oxidation und/oder oder durch Hydrolyse zu SiO₂-Partikeln umgesetzt wird.

Dieser Verfahrensschritt entspricht insbesondere einem bekannten Sootverfahren oder einem bekannten Direktverglasungsverfahren. Die möglichen Ausgestaltungen sind dem Fachmann bekannt.

### Verfahrensschritt (d) - Abscheiden der SiO₂-Partikel

Im Verfahrensschritt (d) werden die aus Verfahrensschritt (c) resultierenden SiO₂-Partikel auf einer Ablagerungsfläche abgeschieden Die möglichen Ausgestaltungen sind dem Fachmann bekannt.

### Verfahrensschritt (e) - gegebenenfalls Trocknen und Verglasen

Im Verfahrensschritt (e) werden die aus Verfahrensschritt (d) resultierenden SiO₂-Partikel unter Bildung von synthetischem Quarzglas gegebenenfalls getrocknet und verglast. Dieser Verfahrensschritt ist insbesondere dann notwendig, wenn die zuvor durchgeführten Verfahrensschritte gemäß einem Sootverfahren durchgeführt wurden. Die möglichen Ausgestaltungen sind dem Fachmann bekannt.

Insgesamt eignet sich das erfindungsgemäße Verfahren auch zur Herstellung von synthetischem Quarzglas durch "Direktverglasen". Bei diesem Verfahren kommt es auf Grund hinreichend hoher Temperaturen bei der Abscheidung der SiO₂-Partikel im Verfahrensschritt (d) auf einer Ablagerungsfläche zu einem direkten Verglasen der SiO₂-Partkel. Beim "Direktverglasen" wird daher auf den optionalen Verfahrensschritt (e) verzichtet. Darüber hinaus eignet sich das erfindungsgemäße Verfahren auch zur Herstellung von Quarzglas nach dem "Sootverfahren", bei welchem die Temperatur beim Abscheiden der SiO₂-Partikel im Verfahrensschritt (d) so niedrig ist, dass eine poröse SiO₂-Sootschicht erhalten wird, die im separaten Verfahrensschritt (e) zu synthetischem Quarzglas getrocknet und verglast wird.

Das erfindungsgemäße Verfahren eignet sich zur Herstellung von synthetischem Quarzglas, welches als ein Außen- oder Innenabscheideverfahren durchgeführt wird. Wenn das erfindungsgemäße Verfahren als Außenabscheideverfahren durchgeführt wird, so handelt es sich bevorzugt um ein OVD-Verfahren (outside Vapour Phase Deposition), VAD-Verfahren (Vapour Phase axial Deposition) oder PECVD-Verfahren (Plasma Enhanced Chemical Vapour Deposition). Wenn das erfindungsgemäße Verfahren als Innenabscheideverfahren durchgeführt wird, so handelt es sich bevorzugt um ein MCVD-Verfahren (Modified Chemical Vapour Deposition).

### Vorrichtung

In einem weiteren Aspekt der vorliegenden Erfindung wird eine Vorrichtung zur Herstellung eines synthetischen Quarzglases bereitgestellt, welche durch die folgenden Bestandteile gekennzeichnet ist:
mindestens eine Verdampferzone **1** zum Verdampfen mindestens eines Einsatzmaterials, das mindestens eine polymerisierbare Polyalkylsiloxanverbindung enthält, unter Bildung eines Einsatzmaterialdampfes;
mindestens eine Reinigungsvorrichtung **2**, in welche der aus der mindestens einen Verdampferzone **1** resultierende Einsatzmaterialdampf geführt wird und welche einen Membranfilter umfasst;
mindestens eine Reaktionszone **3**, in welche der aus der mindestens einen Reinigungsvorrichtung **2** resultierende gereinigte Einsatzmaterialdampf geführt wird und in welcher das Einsatzmaterial durch Pyrolyse oder durch Hydrolyse zu SiO₂-Partikeln umgesetzt wird; und
mindestens eine Abscheidezone **4** mit einer Ablagerungszone für die aus der Reaktionszone **3** resultierenden SiO₂-Partikel unter Bildung von synthetischem Quarzglas. In der erfindungsgemäßen Vorrichtung wird der Membranfilter auf eine Arbeitstemperatur von 130°C bis 210°C erwärmt, und die mittlere maximale Dicke des Membranfilters parallel zur Durchflussrichtung des Einsatzgasstroms beträgt weniger als 200 µm.

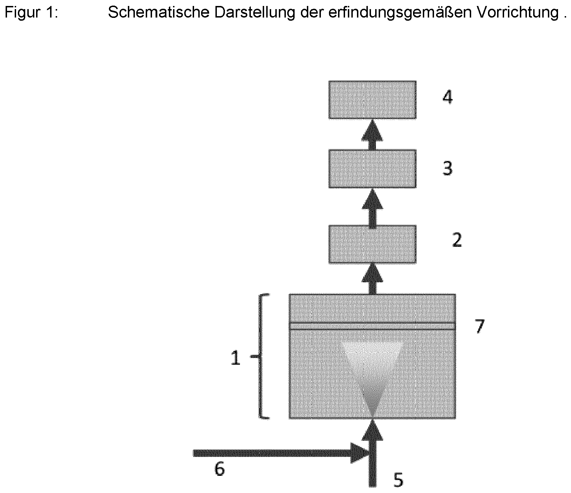

Bevorzugt dient die erfindungsgemäße Vorrichtung der Durchführung des erfindungsgemäßen Verfahrens. Damit sind sämtliche oben beschriebenen Bevorzugungen, welche räumlich körperliche Merkmale aufweisen, ebenfalls für die erfindungsgemäße Vorrichtung bevorzugt. Im Folgenden wird die erfindungsgemäße Vorrichtung beispielhaft mit Bezug auf Figur 1 erläutert.

Die erfindungsgemäße Vorrichtung umfasst mindestens eine Verdampferzone **1.** In dieser Verdampferzone wird mindestens ein Einsatzmaterial, das mindestens eine polymerisierbare Polyalkylsiloxanverbindung enthält, unter Bildung eines Einsatzmaterialdampfes verdampft. Als Einsatzmaterial kann hierbei das oben beschriebene Einsatzmaterial in sämtlichen einzelnen oder kombinierten Ausgestaltungen verwendet werden.

Die Verdampferzone **1** umfasst somit eine Zuleitung **5** für das mindestens eine Einsatzmaterial. Optional kann die Verdampferzone auch eine Zuleitung **6** für ein Inertgas umfassen.

In der Verdampfungszone **1** kommt es zur Überführung des flüssigen Einsatzmaterials in die Gasphase unter Ausbildung eines Einsatzmaterialdampfes. Dem Fachmann sind Ausgestaltungen einer solchen Verdampfungszone bekannt.

Über beheizte Rohrleitungen gelangt das dampfförmige Einsatzmaterial in die Reinigungsvorrichtung **2.** Zusätzlich kann die Reinigungsvorrichtung **2** eine Kontrolleinrichtung zum Messen und/oder Einstellen der Einsatzmaterialdampfgeschwindigkeit umfassen. Weiterhin kann der Druckverlust vor und nach der Reinigungsvorrichtung des Membranfilters gemessen werden. Ebenso ist es möglich, über die durch die Kontrolleinrichtung erhaltenen Daten Rückschlüsse auf den Zustand der Reinigungsvorrichtung **2** zu ziehen und gegebenenfalls die Notwendigkeit eines Austausches oder einer Reinigung zu erkennen.

Die Reinigungsvorrichtung **2** kann des Weiteren bevorzugt mindestens eine Temperiereinheit umfassen. Diese soll gewährleisten, dass der Einsatzmaterialdampf in der mindestens einen Reinigungsvorrichtung **2** in der Gasphase, bei einer Temperatur oberhalb von 100 °C, bevorzugt oberhalb 120 °C, gehalten wird.

Der Membranfilter befindet sich vorzugsweise in einem temperaturbeständigen Gehäuse, welches bevorzugt aus Edelstahl besteht und welches eingangsseitig über eine Rohrleitung mit dem Verdampfer verbunden ist. Hinter dem Membranfilter kommen dann die Dosier- und/oder Regeleinrichtungen, die dann die Abscheidebrenner mit dem Rohmaterial versorgen. Bei Verwendung von mehreren Brennern im Abscheideprozess erfolgt die Versorgung der Abscheidebrenner mit dem dampfförmigen Rohmaterial über ein Verteilersystem.

Bevorzugt wird der Einsatzmaterialdampf aus der Verdampferzone **1** auf im Wesentlichen geradem Wege in die Reinigungsvorrichtung **2** geführt.

Die mindestens eine Reaktionszone **3** der erfindungsgemäßen Vorrichtung ist dem Fachmann in seiner Ausgestaltung bekannt. Hierein wird der aus der mindestens einen Reinigungsvorrichtung **2** resultierende gereinigte Einsatzmaterialdampf geführt und in ihr wird das Einsatzmaterial durch Oxidation und/oder durch Hydrolyse zu SiO₂-Partikeln umgesetzt wird. Hier kann eine Ausgestaltung gemäß dem oben beschriebenen Direktverglasungs-Verfahren oder dem Sootverfahren vorgesehen sein.

Auch die mindestens eine Abscheidezone 4 mit einer Ablagerungszone für die aus der Reaktionszone 3 resultierenden SiO₂-Partikel ist dem Fachmann an sich bekannt.

### Verwendung

In einem weiteren Aspekt der vorliegenden Erfindung wird eine Verwendung eines Membranfilters zur Reinigung eines Einsatzmaterialdampfes, der mindestens eine polymerisierbare Polyalkylsiloxanverbindung enthält. Bei dem Membranfilter kann es sich bevorzugt um sämtliche einzelne oder kombinierte oben beschriebene Ausgestaltungen handeln.

In einer ersten Ausgestaltung eignet sich der Membranfilter insbesondere für die Abtrennung von Polymethylsiloxanen, die aus den hochsiedenden Spurenverunreinigungen unter A), wie obenstehend definiert, entstehen.

In einer zweiten Ausgestaltung eignet sich das erfindungsgemäße Verfahren insbesondere für die Abtrennung von Polymethylsiloxanen, die aus der Reaktion der Spurenverunreinigungen B) und C), wie oben stehend definiert, mit dem Einsatzstoff entstehen.

Die abzutrennenden Polymethylsiloxane gemäß der ersten und der zweiten Ausgestaltungen weisen vorzugsweise ein Molekulargewicht von 500 bis 1800 g/mol auf.

Insbesondere diese Polymethylsiloxane vernetzen an der Membran mit zunehmender Verweilzeit weiter zu Polymethylsiloxanen mit Molekulargewichten von vorzugsweise mehr als 1800 g/mol. Bei diesen oligomeren bzw. polymeren Polymethylsiloxanen handelt es sich üblicherweise um zyklische als auch lineare Siloxane. Es können zyklische Polymethylsiloxane sein, beispielsweise D8, D9, D10, und D11. Es können aber auch lineare Polymethylsiloxane sein, deren endständige Si-Atome beispielsweise eine Trimethylsilyl-Gruppe oder eine Dimethylsilanol-Gruppe sein können.

### Quarzglas

Das durch das erfindungsgemäße Verfahren erhaltene Quarzglas weist eine Homogenität und Reproduzierbarkeit auf, welche aus der effizienten Aufreinigung des Einsatzmaterialdampfes resultiert.

### Bezugszeichenerklärung

- 1: Verdampferzone
- 2: Reinigungsvorrichtung
- 3: Reaktionszone
- 4: Abscheidezone
- 5: Zuleitung für das mindestens eine Einsatzmaterial
- 6: Optionale Zuleitung für ein Inertgas

### Ausführungsbeispiel

Das flüssige Einsatzmaterial OMCTS wird zusammen mit Stickstoff als Trägergas, welches auf 180°C vorgewärmt wurde, in einem Verdampfer gemäß der Ausgestaltung der Internationalen Patentanmeldung PCT/EP2012/075346 bei 170 °C verdampft. Die Zusammensetzung des Stickstickstoff-OMCTS-Dampfgemischs ist so eingestellt, dass der Taupunkt von OMCTS unter den gewählten Prozessbedingungen bei 125 °C liegt. Der verdampfte Einsatzstoff wird über beheizte Leitungen bei 175 °C durch einen auf eine in der Tabelle unten angegebene Temperatur beheizten Membranfilter geleitet der Firma Pall Ulticlean CDS-Filter all-fluoropolymer cartrige Typ ABF UFR3EH1 (removal rating 0,2 µm). Die Druckdifferenz am Filter wird überwacht, wobei die maximale Druckdifferenz vor und hinter der Membran nicht mehr 800 mbar, bevorzugt nicht mehr als 500 mbar, überschritten werden soll.

| Beispiel | Betrieb mit / ohne Membranfilter | Temperatur Membranfilter | Ablagerungen im Dampfverteilungssystem hinter dem Membranfilter nach der Verdampfung von 2 to OMCTS | max OD-Variation am verglasten Produkt nach der Verdampfung von 2 to OMCTS im Multibrenner-Verfahren |
|---|---|---|---|---|
| 1 | ja | 135 °C | ++ | ≤ 8 mm |
| 2 | ja | 175°C | ++ | ≤ 5 mm |
| 3 | ja | 190°C | ++ | ≤ 7 mm |
| 4 | ja | 205°C | + | ≤ 10 mm |
| 5 | nein | ohne Membranfilter | -- | ≥ 15mm |
| 6 | nein | ohne Membranfilter | -- | ≥ 14 mm |
| 7 | nein | ohne Membranfilter | -- | ≥ 16 mm |

In der vorstehenden Tabelle weisen die einzelnen Abkürzungen folgende Bedeutung auf:
++: Man findet im Dampf-Leitungssystem hinter dem Filter keine visuellen Hinweise auf polymere Ablagerungen.
+: Man findet im Dampf-Leitungssystem hinter dem Filter nur vereinzelt kleinen Stellen mit polymeren Ablagerungen.
--: Man findet im Dampf-Leitungssystem deutliche Hinweise für Ablagerungen.

Die Ablagerungen im Verdampfersystem hinter dem Membranfilter sind ein Maß für die Wirksamkeit des Membranfilters, wobei die Wirksamkeit nach der Verdampfung von jeweils 2 to OMCTS gemessen wird
a) in Form von polymeren Ablagerungen, die visuell sichtbar sind im Dampfverteilungssystem hinter dem Filter; und
b) in Form von OD-Variationen am verglasten Produkt im Multibrenner-Verfahren.

Im Unterschied zu einem vergleichbaren Prozess ohne Membranfilter war nach der Verdampfung von >10 to OMCTS kein einziger Wartungs- und Reinigungseingriff an Dosiereinrichtungen erforderlich. Weiterhin wurde eine deutlich verbesserte Reproduzierbarkeit der Prozesse als auch in einer verbesserten Produkthomogenität aus (axiale Homogenität des Sootkörpers bzw. Quarzglases) gefunden.

Es wird erwartet, dass oberhalb von 210 °C die Membran mit der Zeit aufgrund der thermischen Belastung schrumpft und und/oder teilweise zerstört wird. Unterhalb von 130 °C besteht das Risiko, dass sich verstärkt Kondensate an der Membran aufgrund von Taupunktsunterschreitung niederschlagen. Die Membran wird dann von Flüssigkeit benetzt und kann dann nicht mehr wirken.

## Patentansprüche

1. Verfahren zur Herstellung von synthetischem Quarzglas, **gekennzeichnet durch** die folgenden Verfahrensschritte:
(a) Verdampfen eines Einsatzmaterials, das mindestens eine polymerisierbare Polyalkylsiloxanverbindung enthält, unter Bildung eines Einsatzmaterialdampfes;
(b) Durchleiten des aus Verfahrensschritt (a) resultierenden Einsatzmaterialdampfes durch mindestens eine Reinigungsvorrichtung, um den Einsatzmaterialdampf zu reinigen;
(c) Zuführen des aus Verfahrensschritt (b) resultierenden gereinigten Einsatzmaterialdampfes zu einer Reaktionszone, in dem der Einsatzmaterialdampf durch Oxidation und/oder durch Hydrolyse zu SiO₂-Partikeln umgesetzt wird; und
(d) Abscheiden der aus Verfahrensschritt (c) resultierenden SiO₂-Partikel auf einer Ablagerungsfläche;
(e) gegebenenfalls Trocknen und Verglasen der aus Verfahrensschritt (d) resultierenden SiO₂-Partikel unter Bildung von synthetischem Quarzglas;
**dadurch gekennzeichnet, dass** die mindestens eine Polyalkylsiloxanverbindung nach dem Verdampfen im Verfahrensschritt a. und vor der Pyrolyse oder Hydrolyse im Verfahrensschritt b. durch einen Membranfilter geleitet wird, der auf eine Temperatur von 130 bis 210 °C erwärmt ist.

2. Verfahren nach Anspruch 1, **dadurch gekennzeichnet, dass** der Membranfilter auf eine Temperatur von 140 bis 190 °C erwärmt ist.

3. Verfahren nach Anspruch 1 oder 2, **dadurch gekennzeichnet, dass** der Membranfilter auf eine Arbeitstemperatur erwärmt ist, die um 3 bis 60 °C höher ist als der Taupunkt der verwendeten Polyalkylsiloxanverbindung, der sich im Dampfgemisch aus eingesetzter Trägergasmenge und dampfförmiger Polyalkylsiloxanverbindung einstellt.

4. Verfahren nach einem der Ansprüche 1 bis 3, **dadurch gekennzeichnet, dass** es sich bei dem Membranfilter um einen Membranfilter, umfassend mindestens ein Material, ausgewählt aus der Gruppe, bestehend aus Polytetrafluorethylen, Perfluoralkoxypolymeren, Perfluoralkoxyvinylethern oder Polyethersulfonen, handelt.

5. Verfahren nach einem der Ansprüche 1 bis 4, **dadurch gekennzeichnet, dass** die Porengröße des Membranfilters bis zu 0.5 µm beträgt.

6. Verfahren nach einem der Ansprüche 1 bis 5, **dadurch gekennzeichnet, dass** die mittlere maximale Dicke des Membranfilters parallel zur Durchflussrichtung des Einsatzgasstroms weniger als 200 µm beträgt.

7. Verfahren nach einem der Ansprüche 1 bis 6, **dadurch gekennzeichnet, dass** die Druckdifferenz an der Filtermembran zwischen Retentat- und Permeatseite weniger als 800 mbar beträgt.

8. Verfahren nach einem der Ansprüche 1 bis 7, **dadurch gekennzeichnet, dass** das Verfahren bei einem Absolutdruck von bis zu 5 bar durchgeführt wird.

9. Verfahren nach einem der Ansprüche 1 bis 8, **dadurch gekennzeichnet, dass** die Polyalkysiloxanverbindung Octamethylcyclotetrasiloxan ist.

10. Verfahren nach einem der Ansprüche 1 bis 9, **dadurch gekennzeichnet, dass** der Gehalt an Polyalkylsiloxanverbindung in dem Einsatzmaterialdampf mindestens 15 Vol.-% beträgt.

11. Verfahren nach einem der Ansprüche 1 bis 10, **dadurch gekennzeichnet, dass** der Einsatzmaterialdampf zusätzlich ein Inertgas umfasst.

12. Vorrichtung zur Herstellung eines synthetischen Quarzglases, **gekennzeichnet durch** die folgenden Vorrichtungsbestandteile:
mindestens eine Verdampferzone zum Verdampfen mindestens eines Einsatzmaterials, das mindestens eine polymerisierbare Polyalkylsiloxanverbindung enthält, unter Bildung eines Einsatzmaterialdampfes;
mindestens eine Reinigungsvorrichtung, in welche der aus der mindestens einen Verdampferzone resultierende Einsatzmaterialdampf geführt wird und welche einen Membranfilter umfasst;
mindestens eine Reaktionszone, in welche der aus der mindestens einen Reinigungsvorrichtung resultierende gereinigte Einsatzmaterialdampf geführt wird und in welcher das Einsatzmaterial durch Pyrolyse oder durch Hydrolyse zu SiO₂-Partikeln umgesetzt wird; und
mindestens eine Abscheidezone mit einer Ablagerungszone für die aus der Reaktionszone resultierenden SiO₂-Partikel unter Bildung von synthetischem Quarzglas
**dadurch gekennzeichnet, dass** die mindestens eine Reinigungsvorrichtung mindestens einen Membranfilter umfasst, der auf eine Arbeitstemperatur von 130 bis 210 °C erwärmt ist, wobei die mittlere maximale Dicke des Membranfilters parallel zur Durchflussvorrichtung des Einsatzstroms weniger als 200 µm beträgt.

13. Verwendung eines Membranfilters zur Reinigung eines Einsatzmaterialdampfes in der Herstellung von synthetischem Quarzglas, der mindestens eine polymerisierbare Polyalkylsiloxanverbindung enthält, **dadurch gekennzeichnet, dass** die mindestens eine Polyalkylsiloxanverbindung nach dem Verdampfen und vor der Pyrolyse oder Hydrolyse durch einen Membranfilter geleitet wird, der auf eine Temperatur von 130 bis 210 °C erwärmt ist.

## Claims

1. A method for producing synthetic quartz glass, **characterized by** the following process steps:
(a) vaporizing a feedstock comprising at least one polymerizable polyalkylsiloxane compound to form a feedstock vapor;
(b) passing the feedstock vapor resulting from step (a) through at least one cleaning device to clean the feedstock vapour;
(c) feeding the purified feedstock resulting from step (b) to a reaction zone, in which the feedstock steam is converted into SiO₂-particles by oxidation and/or hydrolysis; and
(d) depositing the SiO₂-particles resulting from process step (c) on a deposit area;
(e) optionally drying and vitrifying the SiO₂-particles resulting from step (d) by forming synthetic quartz glass;
**characterized in that** the at least one polyalkylsiloxane compound is passed through a membrane filter after the evaporation in process step a. and before pyrolysis or hydrolysis in the step b., whereby the membrane filter is heated to a temperature of 130 to 210 °C.

2. The process according to claim 1, **characterized in that** the membrane filter is heated to a temperature of 140 to 190 °C.

3. The process according to claim 1 or 2, **characterized in that** the membrane filter is heated to an operating temperature that is 3 to 60 °C higher than the dew point of the polyalkylsiloxane compound used, whereby the dew point is existing in the vapour mixture of incorporated carrier gas and vaporous polyalkylsiloxane compound.

4. The process according to one of claims 1 to 3, **characterized in that** the membrane filter is a membrane filter comprising at least one material selected from the group consisting of polytetrafluoroethylene, perfluoroalkoxy polymers, perfluoroalkoxyvinyl-ethers or polyethersulphones.

5. The process according to any one of claims 1 to 4, **characterized in that** the pore size of the membrane filter is up to 0.5 um.

6. The process according to any one of claims 1 to 5, **characterized in that** the medium maximum thickness of the membrane filter parallel to the direction of the flow of the insert gas stream is less than 200 µm.

7. The process according to one of claims 1 to 6, **characterized in that** the pressure difference at the filter membrane between retentate and permeate side is less than 800 mbar.

8. The process according to any one of claims 1 to 7, **characterized in that** the process is carried at an absolute pressure of up to 5 bar.

9. The process according to one of claims 1 to 8, **characterized in that** the polyalkysiloxane compound is octamethylcyclotetrasiloxane.

10. The process according to any one of claims 1 to 9, **characterized in that** the content of the polyalkylsiloxane compound in the feedstock vapour is at least 15 %.

11. The process according to one of claims 1 to 10, **characterized in that** the feedstock vapour stream additionally comprises an inert gas.

12. An apparatus for producing a synthetic quartz glass, **characterized by** the following device components:
at least one evaporation zone for evaporating at least one feedstock containing at least one polymerizable polyalkysiloxane compound to form a feedstock vapor;
at least one cleaning apparatus into which the feedstock vapour resulting from the evaporation zone is passed and which comprises a membrane filter;
at least one reaction zone into which the feedstock vapour resulting from the cleaning zone is passed and in which the feedstock is converted by pyrolysis or by hydrolysis into SiO₂ particles; and
at least one deposition zone with a deposition zone for the SiO₂ particles resulting from the reaction zone to form synthetic quartz glass;
**characterized in that** the at least one cleaning apparatus comprises at least one membrane filter, whereby the membrane filter is heated to a working temperature of 130 to 210 °C and the medium maximum thickness of the membrane filter parallel to the direction of flow of the feedstock gas stream is less than 200 µm.

13. Use of a membrane filter for purifying a feedstock vapour in the production of synthetic quartz glass which contains at least one polymerizable polyalkylsiloxane compound, **characterized in that** the at least one polyalkylsiloxane compound, after evaporation and before pyrolysis or hydrolysis, is passed through a membrane filter which is heated to a temperature of 130 to 210°C.

## Revendications

1. Procédé de fabrication de verre de quartz synthétique, **caractérisé par** les étapes de procédé suivantes :
(a) évaporer une matière première, qui contient au moins un composé de polyalkylsiloxane polymérisable en formant une vapeur de matière première ;
(b) faire passer la vapeur de matière première résultant de l'étape de procédé (a) à travers au moins un dispositif de nettoyage pour purifier la vapeur de matière première ;
(c) alimenter la vapeur de matière première purifiée résultant de l'étape de procédé (b) à une zone de réaction, dans laquelle la vapeur de matière première est convertie en particules de SiO₂ par moyen d'oxydation et/ou par moyen d'hydrolyse ; et
(d) déposer les particules de SiO₂ résultant de l'étape de procédé (c) sur une surface de dépôt ;
(e) le cas échéant, sécher et vitrer les particules de SiO₂ résultant de l'étape de procédé (d) en formant du verre de quartz synthétique ;
**caractérisé en ce que** l'au moins un composé de polyalkylsiloxane est guidé à travers un filtre moléculaire, qui est chauffé à une température comprise entre 130 et 210°C, après l'évaporation dans l'étape de procédé a. et avant la pyrolyse ou l'hydrolyse dans l'étape de procédé b.

2. Procédé selon la revendication 1, **caractérisé en ce que** le filtre moléculaire est chauffé à une température comprise entre 140 et 190°C.

3. Procédé selon la revendication 1 ou la revendication 2, **caractérisé en ce que** le filtre moléculaire est chauffé à une température de fonctionnement, qui est plus élevée de 3 à 60°C que le point de rosée du composé de polyalkylsiloxane utilisé, lequel est atteint dans le mélange de vapeurs composé de la quantité de gaz porteur utilisée et du composé de polyalkylsiloxane vaporeux.

4. Procédé selon l'une des revendications 1 à 3, **caractérisé en ce que** le filtre moléculaire est un filtre moléculaire comprenant au moins un matériau, qui est sélectionné dans le groupe composé de polytétrafluoroéthylène, de polymères perfluoroalcoxy, d'éther vinylique perfluoroalcoxy ou de polyéthersulfones.

5. Procédé selon l'une des revendications 1 à 4, **caractérisé en ce que** la taille des pores du filtre moléculaire est jusqu'à 0,5 µm.

6. Procédé selon l'une des revendications 1 à 5, **caractérisé en ce que** l'épaisseur moyenne maximum du filtre moléculaire parallèlement au sens du flux du flux gazeux d'amenée est inférieure à 200 µm.

7. Procédé selon l'une des revendications 1 à 6, **caractérisé en ce que** la différence de pression à la membrane de filtre entre le côté du rétentat et le côté du perméat est inférieure à 800 mbar.

8. Procédé selon l'une des revendications 1 à 7, **caractérisé en ce que** le procédé est effectué à une pression absolue de jusqu'à 5 bar.

9. Procédé selon l'une des revendications 1 à 8, **caractérisé en ce que** le composé de polyalkylsiloxane est l'octaméthylecyclotétrasiloxane.

10. Procédé selon l'une des revendications 1 à 9, **caractérisé en ce que** la teneur en composé de polyalkylsiloxane dans la vapeur de matière première est au moins 15 % en volume.

11. Procédé selon l'une des revendications 1 à 10, **caractérisé en ce que** la vapeur de matière première comprend supplémentairement un gaz inerte.

12. Dispositif de fabrication d'un verre de quartz synthétique, **caractérisé par** les composants de dispositif suivants :
au moins une zone d'évaporation pour évaporer au moins une matière première, qui contient au moins un composé de polyalkylsiloxane polymérisable en formant une vapeur de matière première ;
au moins un dispositif de nettoyage, dans lequel la vapeur de matière première résultant de l'au moins une zone d'évaporation est guidé, et lequel comprend un filtre moléculaire ;
au moins une zone de réaction, dans laquelle est amenée la vapeur de matière première purifiée résultant de l'au moins un dispositif de nettoyage, et dans laquelle la matière première est convertie en particules de SiO₂ par moyen de pyrolyse ou par moyen d'hydrolyse ; et
au moins une zone de déposition comprenant une zone de dépôt pour les particules de SiO₂ résultant de la zone de réaction en formant du verre de quartz synthétique,
**caractérisé en ce que** l'au moins un dispositif de nettoyage comprend au moins un filtre moléculaire, qui est chauffé à une température de fonctionnement comprise entre 130 et 210°C, dans lequel l'épaisseur moyenne maximum du filtre moléculaire parallèlement au sens du flux du flux d'amenée est inférieure à 200 µm.

13. Utilisation d'un filtre moléculaire pour purifier une vapeur de matière première dans la fabrication de verre de quartz synthétique, la vapeur de matière première contenant au moins un composé de polyalkylsiloxane polymérisable, **caractérisée en ce que** l'au moins un composé de polyalkylsiloxane est guidé à travers un filtre moléculaire, qui est chauffé à une température comprise entre 130 et 210°C, après l'évaporation et avant la pyrolyse ou l'hydrolyse.
